# EUROPÄISCHE PATENTSCHRIFT

(11) **EP 0 640 662 B1**
(45) Veröffentlichungstag und Bekanntmachung des Hinweises auf die Patenterteilung: **07.04.1999**
(21) Anmeldenummer: 94112740.9
(22) Anmeldetag: 16.08.1994
(51) Int. Cl.: C08L 83/07, C08L 83/05

(54) **Organopolysiloxanmischung zur Herstellung von klebstoffabweisenden Organopolysiloxanfilmen**
Organopolysiloxane composition for the preparation of polysiloxane release films
Composition d'organopolysiloxane pour la fabrication de films antiadhésifs de polysiloxane

(30) Priorität: 26.08.1993 DE 4328657
(43) Veröffentlichungstag der Anmeldung: 01.03.1995
(73) Patentinhaber: GE Bayer Silicones GmbH & Co. KG, 40699 Erkrath (DE)
(72) Erfinder: de Montigny, Armand, Dr., D-51373 Leverkusen (DE); Steinbach, Hans-Horst, Dr., D-51789 Lindlar (DE); Hermann, Udo, Dr., D-41541 Dormagen-Zons (DE)
(74) Vertreter: Frohwitter, Bernhard, Dipl.-Ing.

(56) Entgegenhaltungen:
- EP-A- 0 051 384
- EP-A- 0 069 451
- EP-A- 0 403 890
- EP-A- 0 549 971
- EP-A- 0 559 575
- US-A- 4 772 515

## Beschreibung

Die vorliegende Erfindung betrifft ein Material zur haftungsmindernden Ausrüstung von dünnschichtigen Substraten. Es ist bekannt, daß man Oberflächen von Papier oder anderen Substraten mit Organopolysiloxanen überziehen kann, um zu verhindern, daß klebrige Stoffe an diesen Oberflächen haften (vgl. z.B. W. Noll, "Chemie und Technologie der Silicone", Weinheim 1968, S. 520-521). US-A 4.772.515 offenbart additionsvernetzende Systeme, wobei die ungesättigte Organanylgruppen aufweisende Komponente mindestens zwei Verzweigungsstellen aufweist und mindestens jedes endständige Si-Atom mindestens eine ungesättigte Gruppe aufweist.

An die Verfahren zum Herstellen von klebrige Stoffe abweisenden Überzügen aus Polysiloxanen und an die den Verfahren zugrundeliegenden Materialien werden immer höhere Ansprüche gestellt. Es werden Verfahren und Materialien gefordert, die imstande sind, alle möglichen Substrate, unabhängig von der chemischen und physikalischen Beschaffenheit ihrer Oberfläche, einwandfrei zu beschichten.

Infolge der in jüngster Zeit stark gesteigerten Spannweite zwischen Substraten mit extrem glatten und extrem rauhen Oberflächen, sind die klassischen Siliconbeschichtungsmittel an die Grenzen ihrer Möglichkeiten gestoßen. Dies hat z.B. zur Folge, daß Beschichtungssysteme, die aufgrund ihrer strukturellen Zusammensetzung einwandfreie Filme auf gestrichenen Papieren liefern, bei der Beschichtung extrem glatter Papiere versagen. Sie zeigen bei stärkerer Beanspruchung der Oberfläche starken Abrieb, der sowohl durch längere Aushärtezeiten wie auch durch höhere Aushärtetemperaturen nicht zu vermeiden ist. Umgekehrt versagen Systeme, die mit extrem glatten Papieren einwandfreie Ergebnisse liefern, bei der Beschichtung kritischer, gestrichener Papiere. Somit läßt sich die Spannweite moderner Papiere nur durch den Einsatz mehrerer jeweils strukturell unterschiedlich konzipierter Beschichtungsmittel halbwegs zufriedenstellend überbrücken.

So war es Aufgabe der EP-A 403 890, ein Beschichtungsmittel zu finden, das sowohl geeignet ist, extrem glatte (inkl. Kunststoff-)Oberflächen, wie auch sehr stark gestrichene oder ähnliche Oberflächen einwandfrei ohne Abrieb zu beschichten. Der Vorteil eines solchen Systems ist dadurch gegeben, daß sich bei der technischen Beschichtung beim Wechsel der Papierart ein Auswechseln der Beschichtungsmittel im Vorratsbehälter der Beschichtungsmaschine erübrigt.

Die Papierbeschichtungsmittel gemäß EP-A 403 890 unterscheiden sich von den üblicherweise eingesetzten Strukturen dadurch, daß sie verzweigt sind und beispielsweise neben ungesättigte Gruppen aufweisenden Triorganosiloxyeinheiten auch von solchen Gruppen freie Triorganosiloxyeinheiten aufweisen.

Im Laufe der Weiterentwicklungen auf dem Gebiet der Silicon-Papierbeschichtung wurde der Wunsch nach noch schneller aushärtbaren Systemen laut, um die Maschinenkapazitäten voll ausschöpfen zu können. Darüber hinaus sollte diese schnellere Aushärtung nicht nur bei den üblichen Aushärtetemperaturen, sondern zusätzlich bei wesentlich niederen Temperaturen im 100°C-Bereich erfolgen, so daß auch wärmeempfindliche Papiere und Substrate wirtschaftlich beschichtet werden können.

Die Aufgabe wird durch den Gegenstand der vorliegenden Erfindung gelöst.

Gegenstand der vorliegenden Erfindung sind additionsvernetzbare Organopolysiloxanmischungen, die aus
a) einem verzweigten, ungesättigte Kohlenwasserstoffgruppen aufweisenden Organopolysiloxan,
   - bei dem mindestens 90 % der Organogruppen Methylgruppen sind,
   - dessen Molekulargewicht im Mittel 9 000 bis 60 000 beträgt,
   - bei dem das Verhältnis der Anzahl der Diorganosiloxyeinheiten (D-Einheiten) zur Anzahl der Verzweigungsstellen durchschnittlich zwischen 15 und 40 beträgt, und
   - bei dem mindestens eine Triorganosiloxyeinheit (M-Einheit) und maximal die Hälfte aller M-Einheiten von ungesättigten Resten frei sind, die restlichen M-Einheiten nur je einen ungesättigten Rest tragen, und der Gehalt an ungesättigten Resten 0,2 bis 1 mmol/g beträgt, und
b) einem linearen Methylhydrogenpolysiloxan,
   - bei dem die Anzahl der Siloxyeinheiten pro Mol größer ist als das Verhältnis der Anzahl der D-Einheiten zur Anzahl der Verzweigungsstellen der Komponente a), und
   - wobei mindestens die Hälfte der difunktionellen Siloxyeinheiten (D-Einheiten) direkt an Silicium gebundene Wasserstoffatome aufweist,
   - wobei die Komponenten a) und b) in solchem Mengenverhältnis vorhanden sind, daß das Verhältnis der Anzahl der SiH-Gruppen der Komponente b) zur Anzahl der ungesättigten Kohlenwasserstoffgruppen der Komponente a) zwischen 1,5 und 3,5 liegt, und
c) eine wirksame Menge eines Platinkatalysators,
und gegebenenfalls ferner
d) üblichen, an der Polyadditionsreaktion nicht direkt teilnehmenden Zusatz- und Hilfsstoffen in Mengen von unter 5 Gew.-%, bezogen auf die Gesamtmischung,
bestehen.

Vorzugsweise enthält Komponente a) mindestens 12 T Einheiten pro Molekül.

Die erfindungsgemäßen Organopolysiloxanmischungen weisen sehr hohe Vernetzungsgeschwindigkeiten auf, so daß insbesondere bei der maschinellen Papierbeschichtung, bei der das Papier von Rollen abgezogen, durch eine Beschichtungsvorrichtung und anschließend durch eine Vorrichtung zur Temperaturbehandlung gezogen wird, hohe Bandgeschwindigkeiten realisiert werden können.

Ein Versuch, die erfindungsgemäß hohe Vernetzungsgeschwindigkeit zu erklären, beruht auf der Annahme, daß hierfür die im Vergleich zu den linearen Abschnitten des verzweigten, ungesättigte Kohlenwasserstoffgruppen aufweisenden Polyorganosilans sehr langen linearen Methylhydrogenpolysiloxane verantwortlich sind. Die Methylhydrogenpolysiloxane stellen praktisch über ihre gesamte Länge SiH-Gruppen als Vernetzungspartner zur Verfügung, während die verzweigten Organopolysiloxane lediglich an den Endgruppen ungesättigte Kohlenwasserstoffgruppen als Vernetzungspartner anbieten. Dadurch, daß die Länge der Methylhydrogenpolysiloxane die Länge der linearen Abschnitte der verzweigten Organopolysiloxane weit übersteigt, findet ein Methylhydrogenpolysiloxanmolekül sowohl mehrere endständige Reaktionsgruppen desselben verzweigten Organopolysiloxanmoleküls als auch anderer verzweigter Organopolysiloxanmoleküle, ohne daß zeitaufwendige Molekülbewegungen in der noch nicht vernetzten Mischung notwendig sind. Die linearen Abschnitte der verzweigten Organopolysiloxane weisen eine mittlere Anzahl von D-Einheiten auf, die etwa der Hälfte des Verhältnisses der Anzahl der Diorganosiloxyeinheiten insgesamt pro Molekül zur Anzahl der Verzweigungsstellen pro Molekül beträgt, d.h., etwa zwischen 7 und 20. Die Länge des linearen Methylhydrogenpolysiloxans ist erfindungsgemäß etwa durch mindestens die doppelte Anzahl an Organosiloxygruppen pro Molekül bestimmt.

Die von ungesättigten Resten freien Endgruppen des verzweigten Organopolysiloxans erfüllen die Funktion eines internen Weichmachers. Über die Anzahl der von ungesättigten Resten freien Endgruppen (M-Einheiten) kann die Flexibilität des vernetzten Films gesteuert werden.

90 % der Organogruppen des verzweigten Organopolysiloxans sollen aus Methylgruppen bestehen. Die nach Berücksichtigung der endständigen ungesättigten Organogruppen verbleibenden Organogruppen können aus C₁- bis C₁₄-Alkylgruppen, Cycloalkylgruppen oder gegebenenfalls Alkyl-substituierten Phenylgruppen bestehen. Ferner ist eine geringe Anzahl an nicht-endständigen Alkenylgruppen ebenfalls zulässig. Durch die Auswahl dieser übrigen Organogruppen lassen sich die klebstoffabweisenden Eigenschaften der mit den erfindungsgemäßen Organopolysiloxanmischungen hergestellten Beschichtungen beeinflussen. Größere Organogruppen führen allerdings zur Herabsetzung der Molekülbeweglichkeit in der noch nicht vernetzten Mischung und daher zu einer Herabsetzung der Vernetzungsgeschwindigkeit. Bevorzugt sollen daher erfindungsgemäß alle Organogruppen mit Ausnahme der endständigen ungesättigten Reste Methylgruppen sein. Die ungesättigten Kohlenwasserstoffreste der Komponente a) können C₂- bis C₈-Alkenylgruppen sein, die auch durch Sauerstoff unterbrochen sein können, wie z.B. -CH=CHCH₂OCH₂CH=CH₂. Bevorzugt sind Vinyl- oder Allylgruppen, besonders bevorzugt werden Vinylgruppen eingesetzt.

Als Verzweigungsstellen der Komponente a) werden bevorzugt Monoorganosiloxyeinheiten, d.h., trifunktionelle Siloxyeinheiten (T-Einheiten) eingesetzt. Diese können teilweise auch durch tetrafunktionelle Siloxyeinheiten (SiO_{4/2}-Einheiten, Q-Einheiten) ersetzt sein. Dabei soll erfindungsgemäß eine Q-Einheit als doppelte Verzweigungsstelle, d.h., wie zwei T-Einheiten gezählt werden. Vorzugsweise soll nicht mehr als die Hälfte der Verzweigungsstellen aus Q-Einheiten bestehen, d.h., das Verhältnis der Anzahl von T-Einheiten zur Anzahl von Q-Einheiten soll mindestens 2 betragen.

Die linearen Methylhydrogenpolysiloxane (Komponente b)) weisen vorzugsweise Trimethylsiloxy-Endgruppen auf. Mindestens die Hälfte der D-Einheiten sollen direkt an Silicium gebundene Wasserstoffatome (H(CH₃)SiO-Gruppen) aufweisen. Vorzugsweise beträgt die Anzahl der direkt an Silicium gebundene Wasserstoffatome aufweisenden Gruppen zwischen 70 und 85 % der D-Einheiten. Vorzugsweise soll ferner die Anzahl der Siloxyeinheiten pro Molekül das Doppelte des Verhältnisses der Anzahl der D-Einheiten zur Anzahl der Verzweigungsstellen der Komponente a) nicht überschreiten. Vorzugsweise weisen lineare Methylhydrogenpolysiloxane mit größerer Anzahl an Siloxyeinheiten eine geringere relative Anzahl an D-Einheiten mit direkt an Silicum gebundenen Wasserstoffatomen auf, damit bei gegebenem Verhältnis der Anzahl an SiH-Gruppen zur Anzahl an ungesättigten Kohlenwasserstoffgruppen in der Mischung die Vernetzungsgeschwindigkeit nicht durch eine zu geringe Anzahl von Methylhydrogenpolysiloxanmolekülen im Vergleich zur Anzahl der verzweigten Organopolysiloxanmoleküle herabgesetzt wird.

Polysiloxan-Mischungen, die obigen Bedingungen Genüge tun, weisen z.B. folgende Strukturen auf:
[CH₂=CH(CH₃)₂SiO_{1/2}]₅[(CH₃)₃SiO_{1/2}]₂[(CH₃)₂SiO]₂₀₀[CH₃SiO_{3/2}]₅ und
[(CH₃)₃SiO_{1/2}]₂[(CH₃)HSiO]₃₀[(CH₃)₂SiO]₉ bzw.
[CH₂=CH(CH₃)₂SiO_{1/2}]₅[(CH₃)₃SiO_{1/2}]₄[CH₂=CH(CH₃)SiO]₁[(CH₃)₂SiO]₂₈₀[CH₃SiO_{3/2}]₇ und
[(CH₃)₃SiO_{1/2}]₂[(CH₃)HSiO]₃₃[(CH₃)₂SiO]₉ sowie
[(CH₃)₃SiO_{1/2}]₇[CH₂=CH(CH₃)SiO]₂[CH₂=CH(CH₃)₂SiO_{1/2}]₄[(CH₃)₂SiO]_{133...358}
[CH₂=CHSiO_{3/2}]₃[CH₃SiO_{3/2}]₆ bzw.
[(CH₃)₃SiO_{1/2}]₃[CH₂=CH(CH₃)₂SiO_{1/2}]₇[(CH₃)₂SiO]_{120...320}[CH₃SiO_{3/2}]₄[SiO₂]₂,
jeweils mit entsprechend ausgewählten Methylhyrogensiloxanen.

Polymere obiger Zusammensetzung können nach üblichen Verfahren, die dem Fachmann geläufig sind, hergestellt werden, z.B. durch Hydrolyse von Chlorsilanen und anschließender Polymerisation mit niedermolekularen cyclischen Diorganopolysiloxanen.

Bei den Zusatz- und Hilfsstoffen kann es sich um Modifizierungsmittel, Komplexierungsmittel für den Katalysator oder Lösungsmittel handeln.

Der Vorzug der obigen Zusammensetzungen ist dadurch gegeben, daß diese Materialien auf glatten Papieren ebenso einwandfrei einzusetzen sind wie auf rauhen, z.B. stark gestrichenen Papieren. Dabei braucht man - wenn hohe Vernetzungstemperaturen vermieden werden sollen -, keine endlos lange Vernetzungsgeschwindigkeiten in Kauf zu nehmen. Dies hat zur Folge, daß aufgrund der Universalität in der Anwendung nur Standardansätze bei der technischen Siliconisierung notwendig sind, die einen sogenannten fliegenden Wechsel der Papierarten ermöglichen.

Gegenstand der vorliegenden Erfindung ist auch die Verwendung der erfindungsgemäßen Mischung zur klebstoffabweisenden Substratbeschichtung, insbesondere Papier.

Der Auftrag der obigen Gemische geschieht durch die üblichen Verfahren, z.B. durch Tauchen, Aufwalzen, Sprühen, Streichen, Gießen usw.. Die Härtung erfolgt vorzugsweise zwischen 90 und 200°C.

Die nachfolgenden Beispiele sollen das erfindungsgemäße Verfahren weiter erläutern, ohne es jedoch einzuengen.

### Beispiele 1-8

Folgende Mischungen werden hergestellt:

### Beispiel 1

- 12: Gew.-Tle eines Vinylpolymers der Zusammensetzung [CH₂=CH(CH₃)₂SiO_{1/2}]₇[(CH₃)₃SiO_{1/2}]₃[(CH₃)₂SiO]₂₅₀[CH₃SiO_{3/2}]₈
- 1.6: Gew.-Tle einer Platinkomplexlösung im obigen Polymer mit einem Platingehalt von 440 ppm
- 0.85: Gew.-Tle eines Vernetzers der Zusammensetzung [(CH₃)₃SiO_{1/2}]₂[(CH₃)HSiO]₃₀[(CH₃)₂SiO]₉.

### Beispiel 2

- 12: Gew.-Tle eines Vinylpolymers der Zusammensetzung [CH₂=CH(CH₃)₂SiO_{1/2}]₇[(CH₃)₃SiO_{1/2}]₃[(CH₃)₂SiO]₂₅₀[CH₃SiO_{3/2}]₈
- 1.1: Gew.-Tle einer Platinkomplexlösung im obigen Polymer mit einem Platingehalt von 1320 ppm
- 0.85: Gew.-Tle eines Vernetzers der Zusammensetzung [(CH₃)₃SiO_{1/2}]₂[(CH₃)HSiO]₃₀[(CH₃)₂SiO]₉.

### Beispiel 3

- 12: Gew.-Tle eines Vinylpolymers der Zusammensetzung [CH₂=CH(CH₃)₂SiO_{1/2}]₇[(CH₃)₃SiO_{1/2}]₇[(CH₃)₂SiO]₃₂₀[CH₃SiO_{3/2}]₁₂
- 1.6: Gew.-Tle einer Platinkomplexlösung im obigen Polymer mit einem Platingehalt von 440 ppm
- 0.85: Gew.-Tle eines Vernetzers der Zusammensetzung [(CH₃)₃SiO_{1/2}]₂[(CH₃)HSiO]₃₀[(CH₃)₂SiO]₉.

### Beispiel 4

- 12: Gew.-Tle eines Vinylpolymers der Zusammensetzung [CH₂=CH(CH₃)₂SiO_{1/2}]₇[(CH₃)₃SiO_{1/2}]₇[(CH₃)₂SiO]₃₂₀[CH₃SiO_{3/2}]₁₂
- 1.1: Gew.-Tle einer Platinkomplexlösung im obigen Polymer mit einem Platingehalt von 1320 ppm
- 0.85: Gew.-Tle eines Vernetzers der Zusammensetzung [(CH₃)₃SiO_{1/2}]₂[(CH₃)HSiO]₃₀[(CH₃)₂SiO]₉.

### Beispiel 5 (Vergleich)

- 12: Gew.-Tle eines Vinylpolymers der Zusammensetzung [CH₂=CH(CH₃)SiO]₆[(CH₃)₃SiO_{1/2}]₂[(CH₃)₂SiO]₂₂₀
- 0.5: Gew.-Tle einer Platinkomplexlösung im obigen Polymer mit einem Platingehalt von 1320 ppm
- 1.1: Gew.-Tle eines Vernetzers der Zusammensetzung [(CH₃)₃SiO_{1/2}]₂[(CH₃)HSiO]₃₀[(CH₃)₂SiO]₉.

### Beispiel 6 (Vergleich)

- 12: Gew.-Tle eines Vinylpolymers der Zusammensetzung [CH₂=CH(CH₃)SiO]₆[(CH₃)₃SiO_{1/2}]₂[(CH₃)₂SiO]₂₂₀
- 1.0: Gew.-Tle einer Platinkomplexlösung im obigen Polymer mit einem Platingehalt von 1320 ppm
- 1.15: Gew.-Tle eines Vernetzers der Zusammensetzung [(CH₃)₃SiO_{1/2}]₂[(CH₃)HSiO]₃₀[(CH₃)₂SiO]₉.

### Beispiel 7 (Vergleich analog Beispiel 2 der EP-A 403 890)

- 12: Gew.-Tle eines Vinylpolymers der Zusammensetzung [CH₂=CH(CH₃)₂SiO_{1/2}]₃[(CH₃)₃SiO_{1/2}]₃[(CH₃)₂SiO]₂₅₀[CH₃SiO_{3/2}]₄
- 1.6: Gew.-Tle einer Platinkomplexlösung im obigen Polymer mit einem Platingehalt von 440 ppm
- 0.5: Gew.-Tle eines Vernetzers der Zusammensetzung [(CH₃)₃SiO_{1/2}]₂[(CH₃)HSiO]₃₀[(CH₃)₂SiO]₉.

### Beispiel 8 (Vergleich analog Beispiel 2 der EP-A 403 890)

- 12: Gew.-Tle eines Vinylpolymers der Zusammensetzung [CH₂=CH(CH₃)₂SiO_{1/2}]₃[(CH₃)₃SiO_{1/2}]₃[(CH₃)₂SiO]₂₅₀[CH₃SiO_{3/2}]₄
- 1.1: Gew.-Tle einer Platinkomplexlösung im obigen Polymer mit einem Platingehalt von 1320 ppm
- 0.5: Gew.-Tle eines Vernetzers der Zusammensetzung [(CH₃)₃SiO_{1/2}]₂[(CH₃)HSiO]₃₀[(CH₃)₂SiO]₉.

### Aushärtungsversuche:

### Beispiele 1A-8A

### Laborversuche:

Die Mischungen gemäß Beispielen 1 bis 8 wurden mit einem Laborrakel auf satiniertes glattes Papier verschiedener Provenienz aufgetragen. Die Filmdicke betrug 2 µm. Die Papiere verblieben in einem Kontaktofen bei 90°C bis sie "rub-off"-frei ausgehärtet waren. Diese Zeiten werden in nachstehender Tabelle als tₘᵢₙ angegeben.

### Beispiele 1B-8B

### Maschinenversuche:

Die Maschinenversuche wurden auf einer modernen Maschine bei 3 Temperaturen durchgeführt, wobei für jedes Beispiel (Mischungen gemäß Beispielen 1-8) jeweils die Geschwindigkeiten (Vₘₐₓ) bei den betreffenden Temperaturen ermittelt wurden, bei denen kein "rub-off" entstand. Versuche über 300 m/min konnten zum Zeitpunkt der Versuche aus maschinentechnischen Gründen nicht durchgeführt werden.

Die Ergebnisse sind in Tabelle 1 dargestellt. Die maximal mögliche Bandgeschwindigkeit der Maschine von 300 m/min wurde jeweils bei der niedrigsten Temperatur von 110°C und geringstem Katalysatorgehalt von 50 ppm realisiert. Es ist anzunehmen, daß wesentlich höhere Maschinengeschwindigkeiten bei Vernetzungstemperaturen von 160°C realisierbar sind.

**Tabelle 1**

| Beispiel | A | | B | | Pt [ppm] |
|---|---|---|---|---|---|
| | Kontaktofen [°C] | tₘᵢₙ[Sek] | Maschine [°C] | Maschine [Vₘₐₓ] | |
| 1 | 90 | 13 | 160 | 300 m/min | 50 |
| | | | 120 | 300 | |
| | | | 110 | 300 | |
| 2 | 90 | 9 | 160 | 300 | 100 |
| | | | 120 | 300 | |
| | | | 110 | 300 | |
| 3 | 90 | 13 | → nicht geprüft ← | | 50 |
| 4 | 90 | 10 | → nicht geprüft ← | | 100 |
| 5(Vergl.) | 90 | 15 | 160 | 240 | 50 |
| | | | 120 | *) | |
| | | | 110 | *) | |
| 6(Vergl.) | 90 | 11 | 160 | 240 | 100 |
| | | | 120 | 150 | |
| | | | 110 | *) | |
| 7(Vergl.) | 90 | 19 | 160 | 150 | 50 |
| | | | 120 | *) | |
| | | | 110 | *) | |
| 8(Vergl.) | 90 | 11 | 160 | 200 | 100 |
| | | | 120 | *) | |
| | | | 110 | *) | |

| | | | | | |
|---|---|---|---|---|---|
| *) Vₘₐₓ wurde nicht ermittelt, da sie nicht mehr wirtschaftlich vertretbar war (unterhalb 150 m/min). | | | | | |

## Patentansprüche

1. Additionsvernetzbare Organopolysiloxanmischungen, bestehend aus
a) einem verzweigten, ungesättigten Kohlenwasserstoffgruppen aufweisenden Organopolysiloxan,
- bei dem mindestens 90% der Organogruppen Methylgruppen sind,
- dessen Molekulargewicht im Mittel 9 000 bis 60 000 beträgt,
- bei dem das Verhältnis der Anzahl der Diorganosiloxyeinheiten (D-Einheiten) zur Anzahl der Verzweigungsstellen durchschnittlich zwischen 15 und 40 beträgt, und
- bei dem mindestens eine Triorganosiloxyeinheit (M-Einheit) und maximal die Hälfte aller M-Einheiten von ungesättigten Resten frei sind, die restlichen M-Einheiten nur je einen ungesättigten Rest tragen, und der Gehalt an ungesättigten Resten 0,2 bis 1 mmol/g beträgt, und
b) einem linearen Methylhydrogenpolysiloxan,
- bei dem die Anzahl der Siloxyeinheiten pro Mol größer ist als das Verhältnis der Anzahl der D-Einheiten zur Anzahl der Verzweigungsstellen der Komponente a), und
- wobei mindestens die Hälfte der difunktionellen Siloxyeinheiten (D-Einheiten) direkt an Silicium gebundene Wasserstoffatome aufweist,
- wobei die Komponenten a) und b) in solchem Mengenverhältnis vorhanden sind, daß das Verhältnis der Anzahl der SiH-Gruppen der Komponente b) zur Anzahl der ungesättigten Kohlenwasserstoffgruppen der Komponente a) zwischen 1,5 und 3,5 liegt, und
c) eine wirksame Menge eines Platinkatalysators,
und gegebenenfalls ferner
d) üblichen, an der Polyadditionsreaktion nicht direkt teilnehmenden Zusatz- und Hilfsstoffen in Mengen von unter 5 Gew.-%, bezogen auf die Gesamtmischung.

2. Mischung nach Anspruch 1, wobei die Verzweigungsstellen der Komponente a) aus trifunktionellen Monoorganosiloxyeinheiten (T-Einheiten) bestehen, die bis zur Hälfte durch tetrafunktionelle Siloxygruppen (Q-Einheiten) ersetzt sein können, wobei zur Bestimmung des Verhältnisses von Verzweigungsstellen zu D-Einheiten jede Q-Einheit als 2 Verzweigungsstellen berücksichtigt wird.

3. Mischung nach Anspruch 1 oder 2, wobei die ungesättigten Kohlenwasserstoffgruppen C₂- bis C₈-Alkenyl-Gruppen sind.

4. Mischung nach einem der Ansprüche 1 bis 3, wobei die Anzahl der Organosiloxygruppen der Komponente b) maximal das Doppelte des Verhältnisses der Anzahl der D-Einheiten zur Anzahl der Verzweigungsstellen der Komponente a) beträgt.

5. Mischung nach einem der Ansprüche 1 bis 4, wobei die Komponente a) mindestens 12 T-Einheiten pro Molekül aufweist.

6. Verwendung der Mischung nach einem der Ansprüche 1 bis 5 zur Herstellung von klebstoffabweisenden Beschichtungen.

## Claims

1. Organopolysiloxane compositions which can be crosslinked by addition, consisting of
a) a branched organopolysiloxane having unsaturated hydrocarbon groups,
- wherein at least 90% of the organo groups are methyl groups,
- the molecular weight of which is on average from 9,000 to 60,000,
- wherein the ratio of the number of diorganosiloxy units (D-units) to the number of branch points is on average between 15 and 40, and
- wherein at least one triorganosiloxy unit (M-unit) and at most half of all the M-units are free of unsaturated radicals, the remaining M-units each have only one unsaturated radical and the content of unsaturated radicals is from 0.2 to 1 mmol/g, and
b) a linear methylhydrogenpolysiloxane,
- wherein the number of siloxy units per mole is greater than the ratio of the number of D-units to the number of branch points of component a), and
- wherein at least half of the difunctional siloxy units (D-units) have hydrogen atoms directly bonded to silicon, and
- wherein the components a) and b) are present in a relative proportion such that the ratio of the number of SiH groups of component b) to the number of unsaturated hydrocarbon groups of component a) is between 1.5 and 3.5, and
c) an effective amount of a platinum catalyst,
and optionally
d) customary additives and auxiliary substances which do not directly participate in the polyaddition reaction in amounts less than 5% by weight, calculated in respect of the total mixture.

2. A mixture according to claim 1, wherein the branch points of component a) consist of trifunctional mono-organosiloxy units (T-units) up to one half of which may be substituted by tetrafunctional siloxy groups (Q-units), each Q-unit being counted as 2 branch points in the determination of the ratio of branch points to D-units.

3. A mixture according to claims 1 or 2, wherein the unsaturated hydrocarbon groups are C₂ to C₈ alkenyl groups.

4. A mixture according to any one of claims 1 to 3, wherein the number of organosiloxy groups of component b) is at most double the ratio of the number of D-units to the number of branch points of component a).

5. A mixture according to any one of claims 1 to 4, wherein component a) has at least 12 T-units per molecule.

6. Use of the mixture according to any one of claims 1 to 5 for the preparation of adhesive-repellent coatings.

## Revendications

1. Compositions d'organopolysiloxanes réticulables par addition, consistant en :
a) un organopolysiloxane ramifié présentant des radicaux hydrocarbure insaturés,
- dans lequel au moins 90% des radicaux organiques sont des radicaux méthyle,
- dont le poids moléculaire se situe en moyenne, dans l'intervalle allant de 9000 à 60 000,
- dans lequel le rapport du nombre d'unités diorganosiloxy (unités D) au nombre de points de ramification se situe, en moyenne, dans l'intervalle, allant de 15 à 40, et
- dans lequel au moins une unité triorganosiloxy (unité M) et au maximum la moitié de toutes les unités M sont exemptes de radicaux insaturés, les unités M restantes ne portent chacune, qu'un radical insaturé et la teneur en radicaux insaturés se situe dans l'intervalle allant de 0,2 à 1 mmole/g, et
b) un méthylhydrogénopolysiloxane linéaire,
- dans lequel le nombre d'unités siloxy par mole est supérieur au rapport du nombre d'unités D au nombre de points de ramification du composant a), et
- où au moins la moitié des unités siloxy bifonctionnelles (unités D) présentent des atomes d'hydrogène liés directement sur le silicium,
- où les composants a) et b) sont présents en un rapport quantitatif tel que le rapport du nombre de radicaux SiH du composant b) au nombre de radicaux hydrocarbure insaturés du composant a) se situe dans l'intervalle allant de 1,5 à 3,5, et
c) une quantité active de catalyseur au platine, et facultativement, en outre,
d) des additifs et auxiliaires usuels, ne participant pas directement à la réaction de polyaddition, en une quantité inférieure à 5% en poids, sur base du mélange total.

2. Composition suivant la revendication 1, où les points de ramification du composant a) consistent en des unités monoorganosiloxy trifonctionnelles (unités T), jusqu'à la moitié de celles-ci pouvant être remplacées par des radicaux siloxy tétrafonctionnels (unités Q), où pour déterminer le rapport des points de ramification au unités D, chaque unité Q est envisagée comme deux points de ramification.

3. Composition suivant la revendication 1 ou 2, où les radicaux hydrocarbure insaturés sont des radicaux alcényle en C₂ à C₈.

4. Composition suivant l'une quelconque des revendications 1 à 3, où le nombre des radicaux organosiloxy du composant b) s'élève à, au maximum, le double du rapport du nombre d'unités D au nombre de points de ramification du composant a).

5. Composition suivant l'une quelconque des revendications 1 à 4, où le composant a) présente au moins 12 unités T par molécule.

6. Utilisation de la composition suivant l'une quelconque des revendications 1 à 5, pour préparer des revêtements antiadhésifs.
